# FASCICULE DE BREVET EUROPEEN

(11) **EP 4 072 925 B1**
(45) Date de publication et mention de la délivrance du brevet: **01.11.2023**
(21) Numéro de dépôt: 20816554.8
(22) Date de dépôt: 06.11.2020
(51) Int. Cl.: B62D 21/15, B62D 25/02, B62D 25/20

(54) **VÉHICULE AUTOMOBILE À TRACTION ÉLECTRIQUE AVEC BAS DE CAISSE RENFORCÉS**
ELEKTRISCH ANGETRIEBENES KRAFTFAHRZEUG MIT VERSTÄRKTER WIPPE
ELECTRICALLY DRIVEN MOTOR VEHICLE WITH REINFORCED ROCKER PANEL

(30) Priorité: 13.12.2019 FR 1914347
(43) Date de publication de la demande: 19.10.2022
(73) Titulaire: PSA Automobiles SA, 78300 Poissy (FR)
(72) Inventeur: BESSETTE, Damien, 25150 ECOT (FR); JEUNE, Christelle, 25260 MONTENOIS (FR); FONFREDE, Stephane, 90000 BELFORT (FR); MERESSE, Ludovic, 25750 ARCEY (FR); PERU, Marc, 92290 CHATENAY MALABRY (FR)
(86) Numéro de dépôt international: PCT/FR2020/052029
(87) Numéro de publication internationale: WO 2021/116546

(56) Documents cités:
- DE-A1-102011 051 622
- FR-B1- 3 011 801
- JP-A- 2006 218 987
- JP-A- 2012 111 247
- US-A1- 2002 043 821
- US-A1- 2019 359 260
- US-B1- 9 493 190

## Description

### Domaine technique

La présente invention revendique la priorité de la demande française 1914347 déposée le 13 Décembre 2019.

L'invention a trait au domaine des véhicules automobiles, et plus particulièrement à la structure d'un véhicule automobile à traction électrique (hybride ou électrique pur).

### Technique antérieure

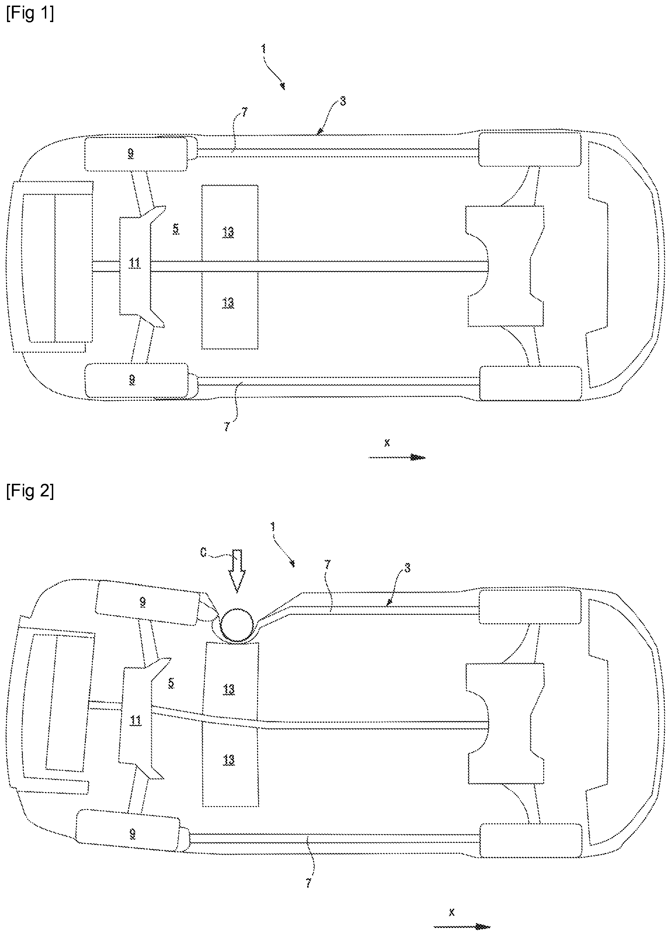

Un véhicule automobile à traction électrique comprend généralement, pour son fonctionnement, un moteur électrique et éventuellement un moteur à combustion couplé audit moteur électrique. Des batteries de traction sont également prévues dans ces véhicules pour alimenter le moteur électrique. La figure 1 montre une vue de dessous d'un véhicule automobile 1 à traction électrique, tel que précédemment décrit. Le véhicule 1 comprend une structure de carrosserie 3 avec un plancher 5 et deux poutres 7 de bas de caisse qui s'étendent longitudinalement de part et d'autre et latéralement audit plancher 5. Le véhicule 1 comprend, en outre, des roues 9 arrière rattachées à un train arrière 11, et des batteries 13 positionnées sous le plancher 5 à l'avant des roues 9 et du train arrière 11. Un axe x représente, sur les figures 1 et 2, le sens de déplacement du véhicule 1.

Lors d'un choc latéral poteau, et plus particulièrement dans le cas présent, lorsque ce choc est occasionné au niveau des batteries 13 du véhicule 1, l'enfoncement de la structure de carrosserie 3 peut entraîner des dégâts importants aux batteries 13, ce qui peut être dangereux pour les passagers du véhicule 1. Les dégâts occasionnés lors d'un tel choc sont montrés à la figure 2. Sur cette figure, le véhicule 1 subit un choc C (représenté par la flèche), causé par un poteau au niveau des batteries 13, du côté gauche du véhicule 1. Ce choc C entraîne l'enfoncement de la poutre 7 correspondante et occasionne des dégâts plus ou moins conséquents suivant le degré d'enfoncement de ladite poutre 7 dans la batterie 13. Des dégâts peuvent également avoir lieu au niveau du train arrière 11 et des roues arrière 9.

Le document de brevet publié FR 3 011 801 B1 divulgue une structure de véhicule automobile où les poutres de bas de caisse présentent un profil particulier et renferment, chacune, un renfort longitudinal. Cette construction des poutres de bas de caisse est conçue pour être plus légère en utilisant notamment des tôles en acier à ultra haute limite d'élasticité (UHLE). Cette construction n'est donc pas adaptée à un renforcement pour une structure plus lourde en raison de la présence de batteries de traction. Aussi, elle n'est pas adaptée à protéger plus particulièrement la zone arrière où est logé le réservoir à carburant.

Le document JP 2006 218987 A décrit un véhicule automobile selon le préambule de la revendication 1.

### Exposé de l'invention

L'invention a pour objectif de pallier au moins un des inconvénients de l'état de la technique susmentionné. Plus particulièrement, l'invention a pour objectif de diminuer les dégâts occasionnés à la structure d'un véhicule lors d'un choc latéral poteau, en particulier au niveau d'une partie arrière des poutres de bas de caisse et pour des véhicules à traction électrique logeant des batteries de traction à une partie arrière du plancher.

L'invention a pour objet un véhicule automobile avec une structure de carrosserie comportant un plancher avec une portion arrière formant un ressaut, et deux poutres s'étendant longitudinalement de part et d'autre latéralement dudit plancher, au moins une desdites poutres comprenant : un longeron intérieur et un longeron extérieur assemblés l'un à l'autre et délimitant un volume intérieur ; et un renfort longitudinal disposé dans le volume intérieur ; remarquable en ce que le renfort longitudinal s'étend vers l'arrière au-delà du ressaut ; et l'au moins une poutre comprend, en outre : un renfort en compression, dit renfort intérieur, positionné longitudinalement au niveau du ressaut, et disposé dans une section creuse du longeron intérieur de manière à servir d'appui au renfort longitudinal en cas de choc latéral contre une extrémité arrière de la poutre.

Avantageusement, les renforts intérieurs sont au nombre de trois, répartis dans le volume intérieur de la poutre et à égale distance les uns des autres.

Selon l'invention, le véhicule comprend, en outre, un profilé arrière s'étendant depuis chacune des extrémités arrière des deux poutres, vers l'arrière et de manière inclinée vers l'intérieur du véhicule, et pour chacune de l'au moins une poutre, le véhicule comprend un renfort en compression, dit renfort de profilé arrière, positionné longitudinalement au niveau du renfort intérieur, et disposé dans le profilé arrière correspondant.

Selon un mode avantageux de l'invention, le renfort longitudinal présente une section transversale en U couché et est positionné dans un creux du longeron extérieur, l'au moins une poutre comprenant un renfort arrière disposé dans le longeron extérieur et présentant une surface d'appui recevant une extrémité arrière dudit renfort longitudinal.

Selon un mode avantageux de l'invention, la section transversale du renfort longitudinal présente à chaque extrémité une aile disposée dans une feuillure de jonction supérieure et inférieure, respectivement, des longerons intérieur et extérieur.

Selon un mode avantageux de l'invention, l'au moins une poutre comprend un renfort en compression, dit renfort extérieur, disposé dans la section transversale en U couché du renfort longitudinal et positionné longitudinalement au niveau du renfort intérieur.

Avantageusement, les renforts extérieurs sont au nombre de trois, répartis dans le volume intérieur de la poutre et à égale distance les uns des autres de manière à être au niveau de chaque renfort intérieur.

Selon un mode avantageux de l'invention, le longeron extérieur présente une section en U couché avec une âme verticale et deux semelles horizontales, la section transversale du renfort longitudinal présentant à chaque extrémité du U couché une aile fixée contre une face intérieure de ladite âme.

Selon un mode avantageux de l'invention, le renfort longitudinal présente une section transversale avec un contour fermé et l'au moins une poutre comprend un renfort arrière disposé dans le longeron extérieur et présentant un renfoncement recevant une extrémité arrière dudit renfort longitudinal.

Selon un mode avantageux de l'invention, chacun du ou des renforts intérieur(s), le cas échéant extérieur(s) et, le cas échéant, de profilé arrière, est un embouti avec des premières portions de paroi s'étendant longitudinalement et des deuxièmes portions de paroi s'étendant transversalement, de manière à assurer une fonction de renfort en compression en cas de choc latéral.

Selon un mode avantageux de l'invention, l'embouti de chacun du ou des renforts intérieur(s) et, le cas échéant, de profilé arrière, présente un profil horizontal ondulé formant, suivant ladite ondulation, alternativement les portions de paroi longitudinales et transversales.

Selon un mode avantageux de l'invention, l'embouti de chacun du ou des renfort(s) extérieur(s) présente un profil horizontal en U avec une âme formant la portion longitudinale et deux ailes formant les portions transversales, chacune desdites ailes présentant des pattes fixées par soudage au renfort longitudinal correspondant.

Les mesures de l'invention sont intéressantes en ce qu'elles permettent de limiter les déformations occasionnées lors d'un choc latéral poteau, en particulier lors d'un choc latéral poteau occasionné au niveau des batteries d'un véhicule à traction électrique. Ainsi, la diminution de l'enfoncement permet d'améliorer la sécurité des passagers dans le véhicule, en évitant l'introduction d'éléments étrangers dans le bac de batteries. L'invention est en outre facilement déclinable, selon les gammes de véhicules que l'on souhaite équiper. Enfin, cette invention est facile à mettre en oeuvre et à fabriquer, grâce à des matériaux et des techniques connus de l'homme du métier.

D'autres caractéristiques et avantages de la présente invention seront mieux compris à l'aide de la description et des dessins.

### Brève description des dessins

[Fig 1] est une vue de dessous d'un véhicule automobile tel que retrouvé dans l'art antérieur ;
[Fig 2] représente une vue de dessous du véhicule de la figure 1, après un choc latéral poteau ;
[Fig 3] représente une vue de dessous d'un véhicule automobile selon l'invention, suite à un choc latéral poteau ;
[Fig 4] représente une vue en perspective d'une structure de véhicule automobile selon l'invention ;
[Fig 5] est une vue éclatée d'une poutre de bas de caisse prévue pour être positionnée sur le côté droit du véhicule des figures 3 et 4, selon un premier mode de réalisation de l'invention ;
[Fig 6] est une vue depuis l'intérieur du véhicule de la poutre de la figure 5 ;
[Fig 7] est une section longitudinale de la poutre représentée à la figure 6, située au niveau d'un profilé arrière de véhicule ;
[Fig 8] est une vue en perspective de renforts selon un deuxième mode de réalisation de l'invention, montés sur un côté gauche d'une structure de véhicule automobile ;
[Fig 9] montre une vue en perspective de renforts de poutre selon un troisième mode de réalisation de l'invention, ces renforts étant adaptés à un côté gauche de véhicule ;
[Fig 10] montre une vue des renforts de la figure 9, montés sur une structure de véhicule.

### Description détaillée

Les exemples décrits ci-après sont donnés à titre indicatif, mais d'autres applications ou modes de réalisation de l'invention non-décrits peuvent être envisagés. L'axe x représente, sur l'ensemble de ces figures, le sens de déplacement du véhicule.

Les figures 1 et 2 sont décrites ci-avant dans la partie 'Technique antérieure'.

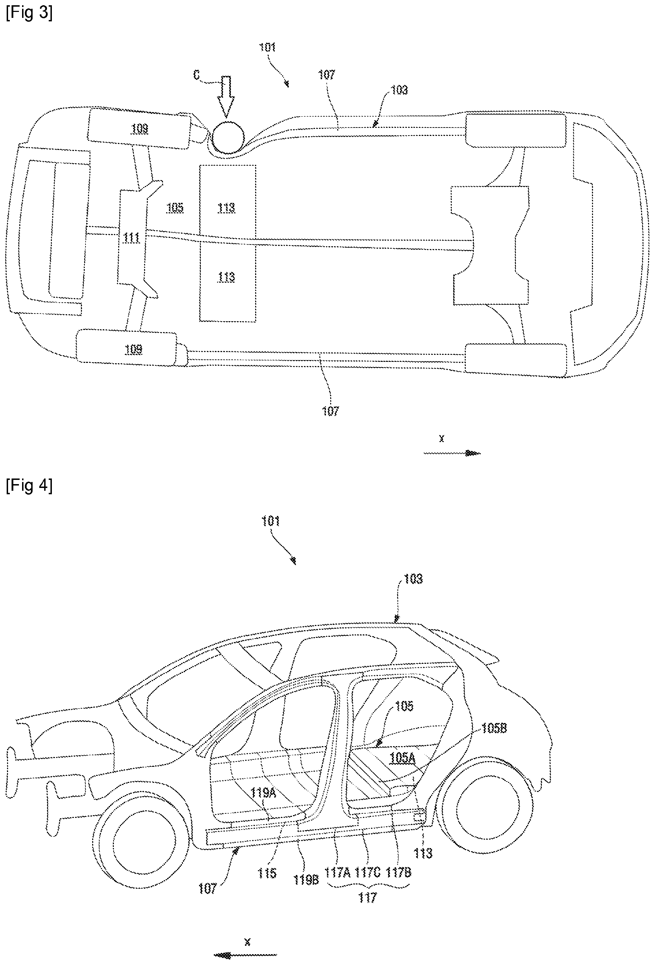

Les figures 3 et 4 montrent, respectivement, une vue du dessous d'un véhicule automobile selon l'invention suite à un choc latéral poteau, et une vue en perspective d'une structure de carrosserie dudit véhicule selon l'invention. Ces figures reprennent la numérotation des figures précédentes pour les éléments identiques ou similaires, la numération étant toutefois incrémentée de 100. Il est par ailleurs fait référence à la description de ces éléments en relation avec l'art antérieur.

La figure 3 montre en particulier une vue du dessous du véhicule, lors d'un choc latéral poteau similaire à celui représenté à la figure 2, dans le cas où le véhicule comprend des renforts selon l'invention.

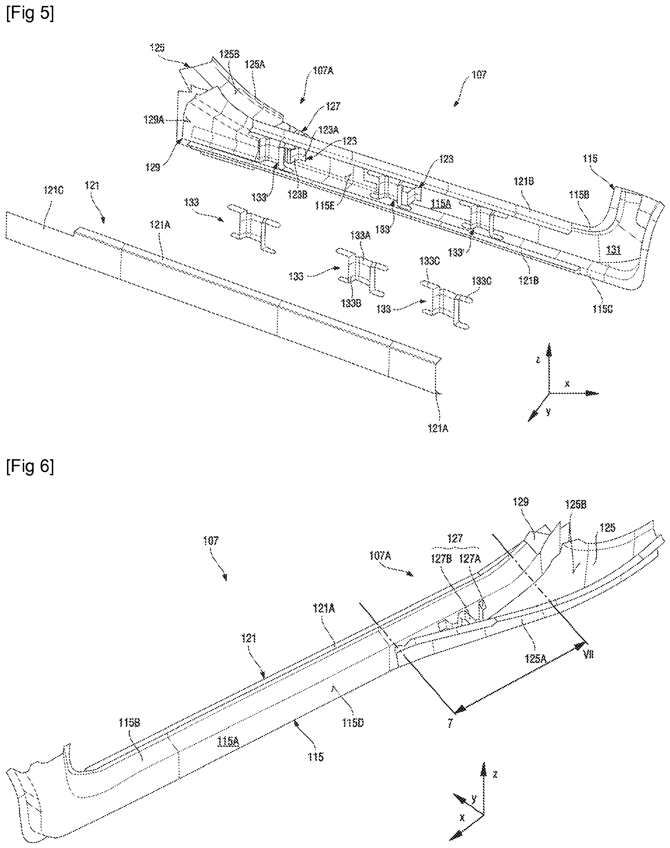

Le véhicule 101 comprend la structure de carrosserie 103 avec un plancher 105 et deux poutres 107 qui s'étendent longitudinalement de part et d'autre et latéralement audit plancher 105. Le véhicule 101 comprend, en outre, des roues 109 arrière rattachées à un train arrière 111, ainsi que des batteries de traction 113 du véhicule 101 positionnées sous le plancher 105 à l'avant desdites roues 109 et du train arrière 111. Lors d'un choc latéral poteau (représenté par une flèche C), la poutre 107, positionnée sur le côté gauche du véhicule 101, s'enfonce au niveau de la batterie 113. La présence de renforts selon l'invention (décrits plus précisément aux figues 5 à 10), limitent en revanche l'enfoncement de la structure de carrosserie 103, et permettent d'éviter l'introduction d'éléments étrangers dans les batteries de traction 113. Ces renforts seront plus particulièrement décrits aux figures 5 à 10.

La figure 4 montre la vue latérale de la structure de véhicule automobile selon l'invention. La structure de carrosserie 103, sur cette figure, comprend le plancher 105, et plus particulièrement une portion arrière 105A dudit plancher 105, cette portion arrière 105A formant un ressaut 105B couramment appelé planche à talon. Ce ressaut 105B permet le positionnement des batteries de traction 113 sous le plancher 105. Sur cette figure, on peut également voir que chaque poutre 107 comprend un longeron intérieur 115 et un longeron extérieur 117 assemblés l'un à l'autre et délimitant un volume intérieur. Plus précisément, Le longeron extérieur 117 présente une section transversale en U couché, comprenant une âme verticale 117A et deux semelles horizontales supérieure 117B et inférieure 117C. Ces semelles (117B, 117C) comprennent à leurs extrémités des ailes formant, avec des ailes des semelles correspondantes du longeron intérieur 115 (les semelles du longeron intérieur n'étant pas visible sur les figures 3 et 4), une feuillure de jonction supérieure 119A et une feuillure de jonction inférieure 119B. Afin de pouvoir étudier l'agencement des renforts, le longeron extérieur 117 ne sera plus représenté sur les figures suivantes.

Les figures 5, 6 et 7 montrent différentes vues de la poutre comprenant des renforts selon un premier mode de réalisation de l'invention. La poutre représentée sur ces figures est une poutre adaptée pour être montée sur un côté droit de véhicule.

Sur ces figures, et de manière commune à l'ensemble des modes de réalisation de l'invention décrit ci-après, le longeron intérieur 115 de la poutre 107 présente, comme le longeron extérieur décrit à la figure 4, une section transversale en U couché comprenant une âme verticale 115A et les deux semelles horizontales supérieure 115B et inférieure 115C. Dans le volume intérieur formé par les deux longerons 115 se trouve un renfort longitudinal 121, qui s'étend vers l'arrière au-delà du ressaut (visible à la figure 4).

La poutre 107 comprend, en outre, un renfort intérieur 123, qui est un renfort en compression. Ce renfort 123 est positionné longitudinalement au niveau du ressaut, et est positionné dans une section creuse du longeron intérieur 115. Ce renfort 123 sert d'appui au renfort longitudinal 121 lors d'un choc latéral contre une extrémité arrière 107A de la poutre 107. Le renfort intérieur 123 est avantageusement un embouti, avec des premières portions de paroi 123A s'étendant longitudinalement et des deuxièmes portions de paroi 123B s'étendant transversalement, formant ainsi un profilé horizontal ondulé assurant une fonction de renfort en compression lors d'un choc latéral. Ainsi, suivant l'ondulation, le renfort intérieur 123 comprend alternativement les portions de paroi longitudinales 123A et transversales 123B.

Le véhicule comprend, en outre, un profilé arrière 125 couramment appelé longeronnet, qui s'étend depuis l'extrémité arrière 107A de la poutre 107 vers l'arrière et de manière inclinée vers l'intérieur du véhicule. Ainsi, ce profilé arrière 125 s'étend entre la poutre 107 et les batteries (visibles aux figures 1 à 3). Le profilé arrière 125 présente une forme triangulaire avec une paroi intérieure 125A qui s'étend depuis une face supérieure 125B dudit profilé 125 et vers le haut du véhicule. Ce profilé arrière 125 supporte un renfort de profilé arrière 127, qui est un renfort en compression, et qui est positionné longitudinalement au niveau du renfort intérieur 123. Ainsi, lors d'un choc latéral, le renfort de profilé arrière 127, positionné entre la paroi intérieure 125A du profilé arrière 125 et une face intérieure 115D du longeron intérieur 115, va amortir le choc grâce à la forme de profil horizontal ondulé de son embouti. Ainsi, suivant ladite ondulation formée par le renfort de profilé arrière 127, ce profil présente, alternativement, des premières portions de parois longitudinales 127A et des deuxièmes portions de parois transversales 127B qui assurent la fonction de renfort en compression lors du choc latéral. L'invention comprend, en outre, un renfort arrière 129 positionné dans le longeron extérieur, et situé au niveau du profilé arrière 125.

De manière spécifique au premier mode de réalisation montré aux figures 5 à 7, le renfort longitudinal 121 présente une section transversale en U couché, et est positionné dans un creux du longeron extérieur (non visible aux figures 5 à 7). De plus, la section transversale du renfort longitudinal 121 présente une forme en U couché avec deux ailes 121A se superposant à deux cornières 121B respectives disposées dans les feuillures de jonction supérieure et inférieure, respectivement, des longerons intérieur 115 et extérieur. Avantageusement, une extrémité arrière 121C du renfort longitudinal 121 va s'insérer dans une surface d'appui 129A du renfort arrière 129. De manière préférentielle, les renforts intérieurs 123 sont au nombre de trois par poutre 107, ces renforts 123 étant positionnés successivement et à égale distance dans le longeron intérieur 115.

La poutre 107 selon le premier mode de réalisation comprend, en outre, un renfort avant 131 positionné contre une face extérieure 115E du longeron intérieur 115, et à l'avant de celui-ci. Ce renfort avant 131 est positionné entre la face extérieure 115E du longeron intérieur 115 et les renforts intérieurs 123 situés à l'avant de la poutre 107. Ce renfort avant 131, couplé aux renforts intérieurs 123, a vocation à améliorer la résistance de la poutre 107 en cas de choc latéral occasionné à l'avant du véhicule.

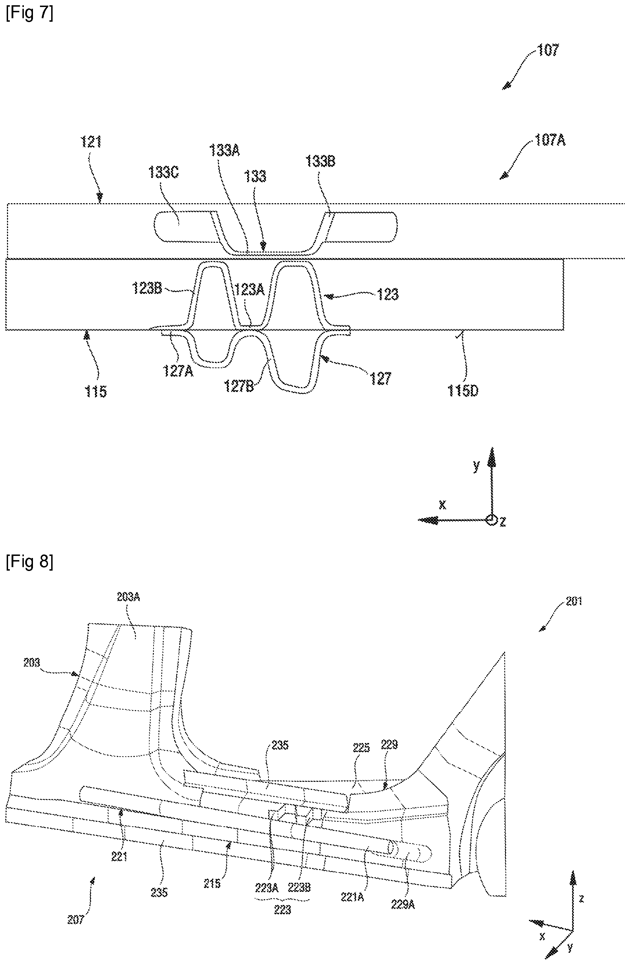

La poutre 107 comprend, en outre, un renfort extérieur 133, ledit renfort 133 étant un renfort en compression. Ce renfort extérieur 133 est positionné longitudinalement dans la section transversale du renfort longitudinal 121 et est positionné longitudinalement au niveau du renfort intérieur 123. Avantageusement, ce renfort extérieur 133 est un embouti avec des premières portions de paroi 133A s'étendant longitudinalement et des deuxièmes portions de paroi 133B s'étendant transversalement. Cette configuration du renfort extérieur 133 permet d'assurer la fonction de renfort en compression lors d'un choc latéral. Avantageusement, les renforts extérieurs 133 sont au nombre de trois par poutre 107, chacun desdits renforts 133 étant positionné au niveau de l'un des renforts intérieurs 123. L'embouti de chaque renfort extérieur 133 présente un profil horizontal en U avec une âme 133A formant la portion longitudinale 133A et deux ailes 133B formant les portions transversales 133B. Chaque aile 133B comprend, en outre, des pattes 133C fixées par soudage au renfort longitudinal 121 correspondant. De manière préférentielle, la poutre 107 comprend une deuxième rangée de renforts extérieurs 133', préférentiellement au nombre de trois, la deuxième rangée étant positionnée entre les renforts intérieurs 123 et la première rangée de renforts extérieurs 133 précédemment décrite, lesdits deuxièmes renforts extérieurs 133' présentant des caractéristiques similaires aux renforts extérieurs 133 de la première rangée. La deuxième rangée de renforts extérieurs 133' n'est pas représentée à la figure 7.

La figure 8 illustre un deuxième mode de réalisation de l'invention. Cette figure reprend la numérotation des figures 3 à 7 précédentes pour les éléments identiques ou similaires, la numération étant toutefois incrémentée de 100. Il est par ailleurs fait référence à la description de ces éléments en relation avec le premier mode de réalisation de l'invention. Plus spécifiquement, la figure 8 est une vue du côté gauche d'un véhicule.

Le renfort longitudinal 221 de la poutre 207 présente une section transversale avec un contour fermé, plus avantageusement formant un tube creux. Ce renfort 221 s'étend depuis le renfort arrière 229 de la poutre 207 vers l'avant du véhicule 201, et plus particulièrement, vers un pied milieu 203A de la structure de carrosserie 203 du véhicule 201. Ce renfort arrière 229 présente, en outre, un renfoncement 229A qui reçoit une extrémité arrière 221A du renfort longitudinal 221. Entre cette extrémité arrière 221A du renfort longitudinal 221 et le longeron intérieur 215 se trouve le renfort intérieur 223 présentant les caractéristiques décrites aux figures 5 à 7 précédentes. Le profilé arrière 225 est également visible sur cette figure, et accueille le renfort de profilé arrière précédemment décrit (et non visible sur cette figure). La poutre 207 comprend, en outre, deux profilés de renfort 235, ces profilés 235 étant positionnés au-dessus et en dessous du renfort longitudinal 221 et s'étendent parallèlement à celui-ci, depuis le renfort arrière 229 jusqu'au pied milieu 203A. Avantageusement, chacun de ces profilés 235 forme une cornière positionnée entre les feuillures de jonction supérieure et inférieure (décrites à la figure 4) des longerons intérieur et extérieur de la poutre 207.

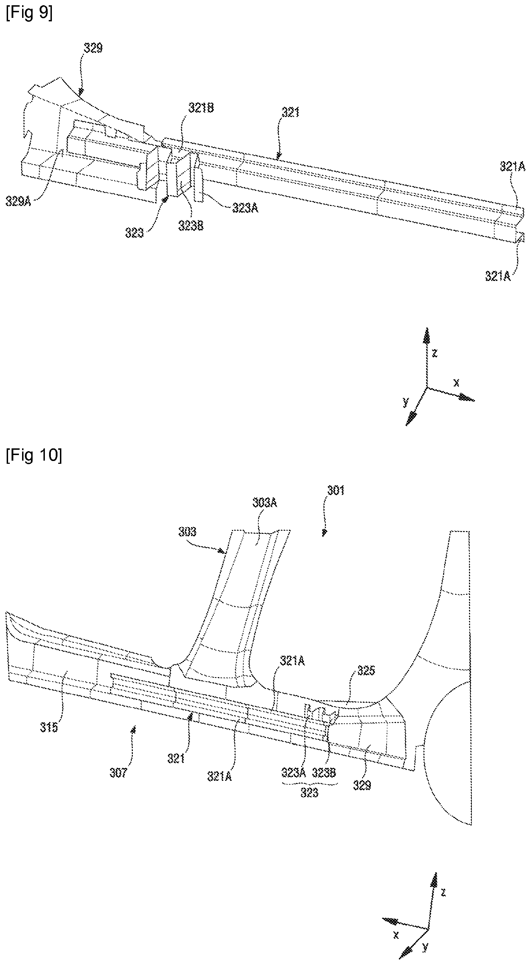

Les figures 9 et 10 illustrent un troisième mode de réalisation de l'invention. Ces figures reprennent la numérotation des figures 3 à 7 précédentes pour les éléments identiques ou similaires, la numération étant toutefois incrémentée de 200. Il est par ailleurs fait référence à la description de ces éléments en relation avec les premier et deuxième modes de réalisation de l'invention. Plus spécifiquement, ces figures montrent deux vues d'un renfort de poutre positionné sur un côté gauche de véhicule.

Sur ces figures, on peut voir que le renfort longitudinal 321 de la poutre 307 du véhicule 301 (dont seul le longeron intérieur 315 est visible à la figure 10) s'étend depuis le renfort arrière 329 vers le pied milieu 303A de la structure de carrosserie 303 de véhicule 301. Ce renfort longitudinal 321 présente une section transversale en U couché et est positionné dans le creux du longeron extérieur (non visible sur les figures 9 et 10) de la poutre 307. Chaque extrémité supérieure et inférieure du renfort 321 présente une aile 321A qui va être fixée contre la face intérieure de l'âme du longeron extérieur. De plus, le renfort arrière 329 présente une surface d'appui 329A apte à accueillir une extrémité arrière 321B du renfort longitudinal 321. Ce mode de réalisation comprend également le renfort de profilé arrière (non visible sur cette figure) et le renfort intérieur 323, qui est un renfort de compression, ces renforts 323 permettant une meilleure absorption des chocs latéraux. Ces deux renforts 323 présentent les mêmes caractéristiques que précédemment décrites au premier mode de réalisation de l'invention.

## Revendications

1. Véhicule automobile (101 ; 201 ; 301) avec une structure de carrosserie (103 ; 203 ; 303) comportant un plancher (105) avec une portion arrière (105A) formant un ressaut (105B), et deux poutres (107 ; 207 ; 307) s'étendant longitudinalement de part et d'autre latéralement dudit plancher (105), au moins une desdites poutres (107 ; 207 ; 307) comprenant :
- un longeron intérieur (115 ; 215 ; 315) et un longeron extérieur (117) assemblés l'un à l'autre et délimitant un volume intérieur ; et
- un renfort longitudinal (121 ; 221 ; 321) disposé dans le volume intérieur ;
le renfort longitudinal (121 ; 221 ; 321) s'étendant vers l'arrière au-delà du ressaut (105B) ; et l'au moins une poutre (107 ; 207 ; 307) comprenant, en outre :
- un renfort en compression, dit renfort intérieur (123 ; 223 ; 323), positionné longitudinalement au niveau du ressaut (105B), et disposé dans une section creuse du longeron intérieur (115 ; 215 ; 315) de manière à servir d'appui au renfort longitudinal (121 ; 221 ; 321) en cas de choc latéral contre une extrémité arrière (107A) de la poutre (107 ; 207 ; 307), **caractérisé en ce que** le véhicule (101 ; 201 ; 301) comprend, en outre, un profilé arrière (125 ; 225 ; 325) s'étendant depuis chacune des extrémités arrière (107A) des deux poutres (107 ; 207 ; 307), vers l'arrière et de manière inclinée vers l'intérieur du véhicule (101 ; 201 ; 301), et pour chacune de l'au moins une poutre (107 ; 207 ; 307), le véhicule (101 ; 201 ; 301) comprend un renfort en compression, dit renfort de profilé arrière (127), positionné longitudinalement au niveau du renfort intérieur (123 ; 223 ; 323), et disposé dans le profilé arrière (125 ; 225 ; 325) correspondant.

2. Véhicule automobile (101 ; 301) selon la revendication 1, **caractérisé en ce que** le renfort longitudinal (121 ; 321) présente une section transversale en U couché et est positionné dans un creux du longeron extérieur (117), l'au moins une poutre (107 ; 307) comprenant un renfort arrière (129 ; 329) disposé dans le longeron extérieur (117) et présentant une surface d'appui (129A ; 329A) recevant une extrémité arrière (121C ; 321B) dudit renfort longitudinal (121 ; 321).

3. Véhicule automobile (101) selon la revendication 2, **caractérisé en ce que** la section transversale du renfort longitudinal (121) présente à chaque extrémité une aile (121A) disposée dans une feuillure de jonction supérieure et inférieure (119A, 119B), respectivement, des longerons intérieur et extérieur (115, 117).

4. Véhicule automobile (101) selon l'une des revendications 2 et 3, **caractérisé en ce que** l'au moins une poutre (107) comprend un renfort en compression, dit renfort extérieur (133), disposé dans la section transversale en U couché du renfort longitudinal (121) et positionné longitudinalement au niveau du renfort intérieur (123).

5. Véhicule automobile (301) selon la revendication 2, **caractérisé en ce que** le longeron extérieur présente une section en U couché avec une âme verticale et deux semelles horizontales, la section transversale du renfort longitudinal (321) présentant à chaque extrémité du U couché une aile (321A) fixée contre une face intérieure de ladite âme.

6. Véhicule automobile (201) selon la revendication 1, **caractérisé en ce que** le renfort longitudinal (221) présente une section transversale avec un contour fermé et l'au moins une poutre (207) comprend un renfort arrière (229) disposé dans le longeron extérieur et présentant un renfoncement (229A) recevant une extrémité arrière (221A) dudit renfort longitudinal (221).

7. Véhicule automobile (101 ; 201 ; 301) selon l'une des revendications 4 à 6, **caractérisé en ce que** chacun du ou des renforts intérieur(s) (123 ; 223 ; 323), le cas échéant extérieur(s) (133) et, le cas échéant, de profilé arrière (127), est un embouti avec des premières portions de paroi (123A, 127A, 133A ; 223A ; 323A) s'étendant longitudinalement et des deuxièmes portions de paroi (123B, 127B, 133B ; 223B ; 323B) s'étendant transversalement, de manière à assurer une fonction de renfort en compression en cas de choc latéral.

8. Véhicule automobile (101 ; 201 ; 301) selon la revendication 7, **caractérisé en ce que** l'embouti de chacun du ou des renforts intérieur(s) (123 ; 223 ; 323) et, le cas échéant, de profilé arrière (127), présente un profil horizontal ondulé formant, suivant ladite ondulation, alternativement les portions de paroi longitudinales (123A, 127A ; 223A ; 323A) et transversales (123B, 127B ; 223B ; 323B).

9. Véhicule automobile (101) selon la revendication 4 et selon l'une des revendications 7 et 8, **caractérisé en ce que** l'embouti de chacun du ou des renfort(s) extérieur(s) (133) présente un profil horizontal en U avec une âme (133A) formant la portion longitudinale (133A) et deux ailes (133B) formant les portions transversales (133B), chacune desdites ailes (133B) présentant des pattes (133C) fixées par soudage au renfort longitudinal (121) correspondant.

## Patentansprüche

1. Kraftfahrzeug (101; 201 301) mit einer Karosseriestruktur (103; 203; 303) mit einem Boden (105) mit einem hinteren Teil (105A), der einen Vorsprung (105B) bildet, und zwei Trägern (107; 207; 307), die sich in Längsrichtung beiderseits des Bodens (105) erstrecken, mindestens eine der Balken (107; 207; 307. umfasst:
- einen inneren Längsträger (115; 215; 315) und einem äußeren Längsträger (117), die miteinander verbunden sind und ein Innenvolumen begrenzen; und
- eine Längsverstärkung (121; 221; 321) im Innenraum angeordnet ist;
Längsverstärkung (121; 221; 321), die sich nach hinten über den Vorsprung (105B) hinaus erstreckt; und mindestens einem Träger (107; 207; 307), die ferner folgendes umfasst:
- eine Verstärkung unter Druck, die so genannte innere Verstärkung (123; 223; 323) in Längsrichtung am Vorsprung (105B) positioniert und in einem hohlen Abschnitt des inneren Längsträgers (115; 215; 315) zur Unterstützung der Längsverstärkung (121; 221; 321) bei seitlichem Aufprall auf ein hinteres Ende (107A) des Trägers (107; 207; 307), **dadurch gekennzeichnet, dass** das Fahrzeug (101; 201 301) ferner ein Hinterprofil (125; 225; 325), die sich von jedem der hinteren Enden (107A) der beiden Träger (107; 207; 307) nach hinten und nach innen geneigt (101; 201 301) und für jeden der mindestens einen Balken (107; 207; 307) das Fahrzeug (101; 201 301) mit einer Pressverstärkung, der so genannten Hinterprofilverstärkung (127), die in Längsrichtung an der Innenverstärkung (123; 223; 323) und im hinteren Profil (125; 225; 325).

2. Kraftfahrzeug (101; 301) nach Anspruch 1, **dadurch gekennzeichnet, dass** die Längsverstärkung (121; 321) einen U-förmigen Querschnitt aufweist und in einer Ausnehmung des äußeren Längsträgers (117) angeordnet ist, wobei der mindestens eine Träger (107; 307) mit einer hinteren Verstärkung (129; 329) im äußeren Längsträger (117) angeordnet und mit einer Auflagefläche (129A; 329A) zur Aufnahme eines hinteren Endes (121C; 321B) der Längsverstärkung (121; 321).

3. Kraftfahrzeug (101) nach Anspruch 2, **dadurch gekennzeichnet, dass** der Querschnitt der Längsverstärkung (121) an jedem Ende einen Flügel (121A) aufweist, der in einer oberen und unteren Verbindungsfalte (119A, 119B) jeweils innere und äußere Längsträger (115, 111) angeordnet ist (17).

4. Kraftfahrzeug (101) nach einem der Ansprüche 2 und 3, **dadurch gekennzeichnet, dass** der mindestens eine Träger (107) eine Druckverstärkung, die so genannte äußere Verstärkung (133), umfasst, die in dem beschichteten U-Querschnitt der Längsverstärkung (121) angeordnet und in Längsrichtung an der Innenverstärkung (123) positioniert ist.

5. Kraftfahrzeug (301) nach Anspruch 2, **dadurch gekennzeichnet, dass** der äußere Längsträger einen U-förmigen Querschnitt aufweist, der mit einem vertikalen Kern und zwei horizontalen Sohlen liegend ist, wobei der Querschnitt der Längsverstärkung (321) an jedem Ende des U liegend einen Flügel (321A) aufweist, der an einer Innenseite des Kerns befestigt ist.

6. Kraftfahrzeug (201) nach Anspruch 1, **dadurch gekennzeichnet, dass** die Längsverstärkung (221) einen Querschnitt mit geschlossener Kontur aufweist und der mindestens eine Träger (207) eine in dem Außenholm angeordnete hintere Verstärkung (229) mit einer Ausnehmung (229A) aufweist, die ein hinteres Ende (221A) der Längsverstärkung (221).

7. Kraftfahrzeug (101; 201 301) nach einem der Ansprüche 4 bis 6, **dadurch gekennzeichnet, dass** jede der inneren Verstärkungen (123; 223; 323), gegebenenfalls außenseitig (133) und gegebenenfalls rückseitig (127), ist ein Mundstück mit ersten Wandteilen (123A, 127A, 133A; 223A; 323A) in Längsrichtung und zweite Wandteile (123B, 127B, 133B; 223B; 323B), die sich quer erstrecken, um bei einem seitlichen Aufprall eine Druckverstärkungsfunktion zu gewährleisten.

8. Kraftfahrzeug (101; 201 301) nach Anspruch 7, **dadurch gekennzeichnet, dass** das Abziehen jeder der inneren Verstärkungen (123; 223; 323) und gegebenenfalls eines Hinterprofils (127) ein gewelltes Horizontalprofil aufweisen, das entlang dieser Wellung abwechselnd die Längswandteile (123A, 127A; 223A; 323A) und Quer (123B, 127B; 223B; 323B).

9. Kraftfahrzeug (101) nach Anspruch 4 und nach einem der Ansprüche 7 und 8, **dadurch gekennzeichnet, dass** die Ausformung jeder der äußeren Verstärkungen (133) ein U-förmiges horizontales Profil mit einem den Längsabschnitt (133A) bildenden Kern (133A) und zwei Schenkeln (133B), die die Querabschnitte (133B) bilden, wobei jeder der Flügel (133B) Laschen (133C) aufweist, die durch Schweißen an der entsprechenden Längsverstärkung (121) befestigt sind.

## Claims

1. Motor vehicle (101; 201; 301) with a body structure (103; 203; 303) having a floor (105) with a rear portion (105A) forming a backstroke (105B) and two beams (107; 207; 307) extending lengthwise on both sides of the said floor (105), at least one of the said beams (107); 207; 307) including:
- an inner longeron (115; 215; 315) and an exterior longeron (117) assembled to each other and delimiting an inner volume; and
- a longitudinal reinforcement (121; 221; 321) disposed of in the domestic volume;
longitudinal reinforcement (121; 221; 321) extending aft beyond the spring (105B); and at least one beam (107); 207; 307), including:
- a compression reinforcement, or inner reinforcement (123; 223; 323), positioned lengthwise at the spring level (105B), and placed in a hollow section of the inner longeron (115; 215; 315) to be used as support for longitudinal reinforcement (121; 221; 321) in the case of a side impact against a rear end (107A) of the beam (107; 207; 307), characterized as the vehicle (101; 201; 301) also includes a rear profile (125; 225; 325) extending from each of the rear ends (107A) of the two beams (107; 207; 307), backward and inclined towards the inside of the vehicle (101; 201; 301), and for each of at least one beam (107; 207; 307), the vehicle (101; 201; 301) includes a compression reinforcement, known as the rear profile reinforcement (127), positioned lengthwise at the interior reinforcement (123; 223; 323), and placed in the rear profile (125; 225; 325) corresponding.

2. Motor vehicle (101; 301) according to claim 1, characterized as the longitudinal reinforcement (121; 321) has a cross section in a U-shaped layer and is positioned in a trough of the outer longeron (117), at least one beam (107); 307) including a rear reinforcement (129; 329) placed in the outer longeron (117) and having a supporting surface (129A; 329A) receiving a rear end (121C; 321B) of the said longitudinal reinforcement (121; 321).

3. Motor vehicle (101) according to Claim 2, characterized as the cross section of the longitudinal reinforcement (121) has at each end a wing (121A) arranged in a top and bottom junction strip (119A, 119B), respectively, of the inner and outer longerons (115, 117).

4. Motor vehicle (101) according to one of Claims 2 and 3, characterized as one or more beam (107) includes a compression reinforcement, known as exterior reinforcement (133), placed in the U-side section of the longitudinal reinforcement (121) and positioned lengthwise at the level of the inner reinforcement (123).

5. Motor vehicle (301) according to Claim 2, characterized as the outer longeron has a U-section lying with a vertical core and two horizontal soles, the cross-section of the longitudinal reinforcement (321) with a wing (321A) attached to an inner face of the said soul at each end of the lying U.

6. Motor vehicle (201) according to Claim 1, **characterized by** the longitudinal reinforcement (221) having a cross section with a closed contour and at least one beam (207) includes a rear reinforcement (229) placed in the outer spar and having a cross section (229A) receiving a rear end (221A) of the said longitudinal reinforcement (221).

7. Motor vehicle (101; 201; 301) according to one of the claims 4 to 6, characterized as each of the domestic reinforcement(s) (123; 223; 323), if any outside(s) (133) and, if applicable, rear profile (127), is a jam with first portions of wall (123A, 127A, 133A; 223A; 323A) extending lengthwise and second wall portions (123B, 127B, 133B; 223B; 323B) extending horizontally, to ensure a compressive reinforcement function in the event of a side impact.

8. Motor vehicle (101; 201; 301) according to claim 7, characterized as the pitch of each of the domestic reinforcements(s) (123; 223; 323) and, where applicable, a rear profile (127), has a wavy horizontal profile forming alternately the longitudinal wall portions (123A, 127A), following the said undulation; 223A; 323A) and transversal (123B, 127B; 223B; 323B).

9. Motor vehicle (101) according to Claim 4 and one of Claims 7 and 8, **characterized by** the stamping of each of the exterior reinforcement(s) (133) having a horizontal U profile with a core (133A) forming the longitudinal portion (133A) and two wings (133B) forming the transverse portions (133B), each wing (133B) having legs (133C) fixed by welding to the corresponding longitudinal reinforcement (121).
